(19) Europäisches Patentamt
European Patent Office
Office européen des brevets

(11) **EP 4 423 475 B1**

(12) **FASCICULE DE BREVET EUROPEEN**

(45) Date de publication et mention de la délivrance du brevet:
**03.12.2025 Bulletin 2025/49**

(21) Numéro de dépôt: **22802679.5**

(22) Date de dépôt: **24.10.2022**

(51) Classification Internationale des Brevets (IPC):
**G01M 15/12** *(2006.01)*  **G01M 15/14** *(2006.01)*
**G01M 13/028** *(2019.01)*

(52) Classification Coopérative des Brevets (CPC):
**G01M 7/00; G01M 13/028; G01M 15/12; G01M 15/14**

(86) Numéro de dépôt international:
**PCT/FR2022/052013**

(87) Numéro de publication internationale:
**WO 2023/073314 (04.05.2023 Gazette 2023/18)**

(54) **PROCEDE DE SURVEILLANCE D'UN SYSTEME MECANIQUE ROTATIF D'UN AERONEF**

VERFAHREN ZUR ÜBERWACHUNG EINES MECHANISCHEN DREHSYSTEMS EINES FLUGZEUGS

METHOD FOR MONITORING A ROTARY MECHANICAL SYSTEM OF AN AIRCRAFT

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **27.10.2021 FR 2111430**

(43) Date de publication de la demande:
**04.09.2024 Bulletin 2024/36**

(73) Titulaires:
- **SAFRAN**
  **75015 Paris (FR)**
- **INSTITUT NATIONAL DES SCIENCES APPLIQUÉES LYON**
  **69621 Villeurbanne Cedex (FR)**

(72) Inventeurs:
- **HAWWARI, Yasmine**
  **77550 Moissy-Cramayel (FR)**
- **ABBOUD, Dany**
  **77550 Moissy-Cramayel (FR)**
- **MARNISSI, Yosra**
  **77550 Moissy-Cramayel (FR)**
- **EL BADAOUI, Mohammed**
  **77550 Moissy-Cramayel (FR)**

(74) Mandataire: **Gevers & Orès**
**Immeuble le Palatin 2**
**3 Cours du Triangle**
**CS 80165**
**92939 Paris La Défense Cedex (FR)**

(56) Documents cités:
**WO-A1-2010/094915      WO-A1-2014/184657**

- **DAVID A CLIFTON ET AL: "Bayesian Extreme Value Statistics for Novelty Detection in Gas-Turbine Engines", 2008 IEEE AEROSPACE CONFERENCE; 1-8 MARCH 2008; BIG SKY; MT, USA, IEEE, PISCATAWAY, NJ, USA, 1 March 2008 (2008-03-01), pages 1 - 11, XP031256293, ISBN: 978-1-4244-1487-1**

## Description

### Domaine technique de l'invention

L'invention est relative au domaine de la surveillance, par l'analyse de signaux vibratoires, de l'état des systèmes mécaniques qui composent une turbomachine d'aéronef. Elle se rapporte, en particulier, à un procédé de surveillance d'un système mécanique rotatif d'un aéronef.

### Arrière-plan technique

L'état de la technique comprend notamment les documents WO-A1-2010/094915, WO-A1-2014/184657 et l'article scientifique intitulé « Bayesian extreme value statistics for novelty detection in gas-turbine engines » publié dans 2008 IEEE Aerospace Conference par David A Clifton *et al*.

Dans un aéronef, les éléments mécaniques en rotation génèrent des vibrations qui peuvent résulter, outre leur fonctionnement normal, d'un balourd, d'une excentricité de masse, de roulements usés, d'arbres tordus ou mal alignés, etc.

Dans ce cas, les vibrations générées ont un caractère cyclique dont la périodicité dépend de l'élément et du type de détérioration subi par cet élément.

Par exemple, un défaut de balourd d'un rotor génère une composante purement sinusoïdale dont la fréquence instantanée est égale à celle de la rotation et l'amplitude est sensiblement proportionnelle au carré de la vitesse de rotation.

Un autre exemple est le défaut d'alignement parallèle d'un arbre ayant pour conséquence de générer une vibration sinusoïdale à une fréquence double à celle de l'arbre.

Ces défauts peuvent aboutir à la réduction de la durée de la vie des éléments mécaniques concernés voire à un arrêt intempestif du système mécanique auquel les éléments mécaniques sont intégrés. En outre, les défauts d'un élément mécanique peuvent affecter un autre élément mécanique appartenant au même système mécanique. Par exemple, un défaut d'alignement d'un arbre aboutit à une usure prématurée des paliers, joints et accouplements de la chaine cinématique à laquelle appartient cet arbre.

L'analyse spectrale est une technique connue de l'analyse des signaux vibratoires. La périodicité des vibrations entraîne une signature desdites vibrations qui consiste en un ensemble de pics dans le domaine spectrale (ou domaine de Fourrier).

Ainsi, sur la base d'une connaissance a priori de la cinématique d'un système mécanique surveillé, un opérateur peut déduire l'état dudit système mécanique, voire d'un élément mécanique unique du système, en surveillant l'évolution de l'amplitude de cette signature. Toutefois, dans la pratique, une connaissance a priori du système mécanique surveillé n'est pas garantie.

En outre, dans un environnement tel qu'une turbomachine d'aéronef, la détection aveugle de pics spectraux est complexe en raison de la présence d'un bruit aléatoire élevé. En effet, les signaux vibratoires des systèmes mécaniques aéronautiques sont connus pour avoir un rapport signal sur bruit très faible et pour présenter un bruit coloré (par opposition à un bruit blanc).

Dans la plupart des approches de l'état de la technique ce bruit est souvent considéré comme blanc gaussien ce qui n'est en pratique pas le cas.

En outre, pour des systèmes mécaniques rotatifs d'aéronef, les spectres des signaux vibratoires présentent une grande complexité dans leur structure fréquentielle, ce qui rend la connaissance du nombre de pics irréalisable.

### Résumé de l'invention

La présente invention propose une solution à ces inconvénients.

À cet effet, selon un premier aspect, l'invention concerne un procédé de surveillance d'un système mécanique rotatif d'un aéronef comprenant les étapes suivantes :

- acquisition d'un signal représentatif de vibrations du système mécanique rotatif ;
- détermination d'une densité spectrale de puissance estimée dudit signal ;
- détermination d'une densité spectrale de puissance estimée d'un bruit à partir de la densité spectrale de puissance estimée du signal ;

ledit procédé de surveillance étant caractérisé en ce qu'il comprend en outre les étapes suivantes :

- détermination d'une densité spectrale de puissance égalisée égale à la densité spectrale de puissance estimée du signal divisée par la densité spectrale de puissance estimée du bruit ;
- détermination d'une densité spectrale de puissance tronquée égale à l'ensemble des valeurs de la densité spectrale de puissance égalisée inférieures à un premier seuil ;
- ajustement de la densité spectrale de puissance tronquée par une loi gamma tronquée ;
- détermination, à partir de la loi gamma tronquée, d'un second seuil dit de détection ;
- extraction, dans la densité spectrale de puissance égalisée, des pics supérieurs au seuil de détection ; et,
- identification d'une défaillance du système mécanique rotatif à partir d'une comparaison des pics extraits avec une densité spectrale de puissance de référence. Le procédé selon l'invention peut comprendre une ou plusieurs des caractéristiques suivantes, prises isolément les unes des autres ou en combinaison les unes avec les autres :

- le signal représentatif de vibrations est un signal vibratoire, de préférence obtenu à partir d'un accéléromètre, ou un signal acoustique, de préférence obtenu à partir d'un microphone.
- la densité spectrale de puissance estimée du signal est déterminée à partir du calcul du périodogramme moyenné du signal.
- la densité spectrale de puissance estimée du bruit est déterminée à partir d'une régression appliquée à la densité spectrale de puissance estimée du signal.
- la régression est appliquée au logarithme népérien de la densité spectrale de puissance estimée du signal.
- la fonction de régression utilisée est une fonction de type B-spline.
- le premier seuil est fixé de sorte qu'un pourcentage déterminé des valeurs de la densité spectrale de puissance égalisée est conservé dans la densité spectrale de puissance tronquée.
- l'ajustement de la densité spectrale de puissance tronquée par une loi gamma tronquée est réalisé à partir d'une maximisation d'une fonction de vraisemblance d'une densité de probabilité de ladite loi gamma tronquée.
- le seuil de détection est déterminé tel que la densité de probabilité de la loi gamma tronquée est égale à une valeur prédéterminée dite probabilité de fausse alarme.
- la densité spectrale de puissance de référence correspond à une densité spectrale de puissance égalisée obtenue pour un système mécanique rotatif d'une turbomachine d'aéronef sans défaillance.

**Brève description des figures**

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :

la figure 1 est un schéma synoptique des étapes d'un procédé de surveillance selon un mode de mise en œuvre de l'invention ;
la figure 2 est un diagramme d'étapes d'un procédé de surveillance selon un mode de mise en œuvre de l'invention ;
la figure 3 est un exemple de densités spectrales de puissance de signaux représentatifs de vibrations d'un système mécanique rotatif selon l'invention ;
la figure 4 est un exemple de densités spectrales de puissance égalisées de signaux représentatifs de vibrations d'un système mécanique rotatif selon l'invention ;
la figure 5 est un exemple d'histogrammes obtenus à partir des densités spectrales de puissance égalisées représentées à la figure 4 ;
la figure 6 est un exemple d'histogrammes tronqués obtenus à partir des densités spectrales de puissance égalisées représentées à la figure 4 ;
la figure 7 est un exemple de densités spectrales de puissance égalisées et de seuils de détection selon l'invention ; et,
la figure 8 est un exemple de pics détectés à partir de signaux représentatifs de vibrations d'un système mécanique rotatif selon l'invention.

Les éléments ayant les mêmes fonctions dans les différents modes de réalisation ont les mêmes références dans les figures.

**Description détaillée de l'invention**

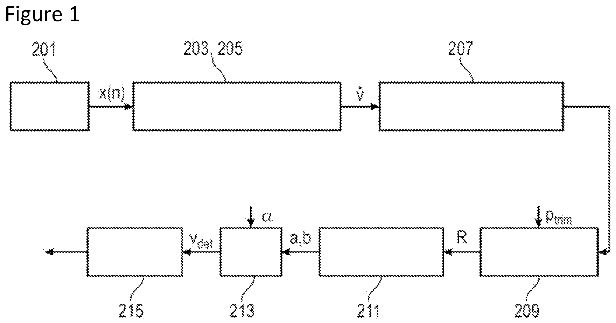

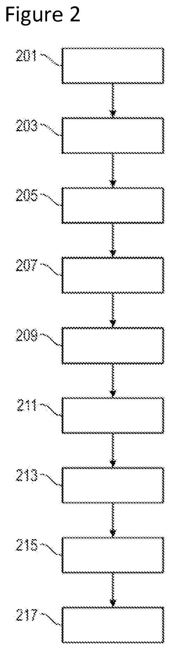

En référence à la figure 1 et à la figure 2, nous allons maintenant décrire un exemple de mise en œuvre d'un procédé de surveillance d'un système mécanique rotatif d'un aéronef selon l'invention.
Dans ce qui suit, un système mécanique rotatif est un ensemble de composantes (i.e. d'éléments) mécaniques rotatives qui ont une seule fonction et qui sont regroupées spatialement. Par exemple, une turbomachine d'aéronef est composée de plusieurs systèmes mécaniques rotatifs comme notamment une boîte de transmission auxiliaire des équipements (en anglais « *Auxiliary GearBox, AGB* »). Les différents éléments mécaniques génèrent des vibrations lors de leur fonctionnement dont la fréquence et l'amplitude sont affectées par une éventuelle détérioration de leur état.

Dans l'exemple représenté, l'étape 201 consiste en l'acquisition d'un signal x représentatif de vibrations du système mécanique rotatif. Le signal en question, peut-être, de manière non-limitative, un signal vibratoire, obtenu par exemple à partir d'un accéléromètre, ou un signal acoustique, obtenu par exemple à partir d'un microphone.

En outre, il est considéré par la suite que le signal x s'écrit sous la forme :

[Math. 1]

$$x(n) = s(n) + v(n)$$

où n est un indice d'échantillon, s(n) est une somme (réelle) de sinusoïdes caractérisée par une densité spectrale de puissance (également désignée par l'acronyme DSP dans la suite) à masses spectrales finies à des fréquences discrètes et v(n) est une composante (réelle également) large-bande stationnaire et aléatoire de variance $\sigma_v^2$.

Par exemple, dans le cas d'un signal acoustique, s(n) représente les composantes cycliques produites par une machine rotative et v(n) représente les effets du bruit d'écoulement, de turbulence et des évènements transitoires.

L'étape 203 consiste en la détermination d'une densité spectrale de puissance estimée $\hat{X}$ du signal x. Dans le mode de mise en œuvre décrit, la DSP $\hat{X}$ du signal x est déterminée à partir du calcul d'un périodogramme moyenné du signal. Ainsi, elle est calculée selon l'équation suivante :

[Math. 2]

$$\hat{X}(k) = \frac{1}{M} \sum_{m=0}^{M-1} \left| \sum_{n=0}^{N-1} w(n)x(n + mH)e^{-\frac{j2\pi kn}{N}} \right|^2$$

où k est un indice de fréquence, H est la taille du recouvrement, L est la taille du signal x, N est la taille du segment, $M = \left\lfloor \frac{L+H-N}{H} \right\rfloor$ est le nombre de moyennes disponibles et w(n) est la fenêtre d'apodisation utilisée.

En outre, l'homme du métier appréciera que, dans des variantes de mise en œuvre du procédé de surveillance de l'invention, l'étape 203 peut consister en la détermination d'une transformée temporelle du signal x.

L'étape 205 consiste en la détermination d'une densité spectrale de puissance estimé $\hat{V}$ du bruit v à partir de la densité spectrale de puissance estimée $\hat{X}$ du signal x.

Cette étape s'appuie sur une définition de la DSP du bruit (quand x(n) = v(n)) telle que :

[Math. 3]

$$V(k) = \lim_{N \to +\infty} \mathbb{E}\{\hat{X}(k)\}$$

Dans la mesure où le signal x(n) contient, en plus de v(n), la partie déterministe s(n), $\hat{V}$ n'est pas disponible mais elle peut être estimée à partir de la tendance de $\hat{X}$ même si cette dernière contient également des pics.

Ainsi, par exemple, la DSP $\hat{V}$ du bruit v peut être déterminée à partir d'une régression appliquée à la densité spectrale de puissance estimée $\hat{X}$ du signal x. Un telle opération s'écrit comme suit :

[Math. 4]

$$\hat{X}(k) = f(k) + \epsilon(k)$$

où f est une fonction de régression lisse et ε est une erreur.

Dans l'exemple non-limitatif décrit, dans la mesure où le modèle de la densité spectrale de puissance du bruit est inconnu (par exemple lorsqu'il s'agit d'un bruit dit rose), la régression n'est pas appliquée à la DSP $\hat{X}$ globalement mais plutôt de manière locale suivant une fenêtre glissante de la DSP $\hat{X}$.

Autrement dit, il s'agit d'approximer la fonction de régression par une base de splines et d'estimer ses coefficients.

Ces splines sont continues et ont des dérivées continues appelés nœuds. Le nombre de nœuds détermine la largeur de bande de la spline et leurs propriétés de conservation comme les moments des données et l'absence de effets de bords les rendent pertinents pour cette régression. En outre, les splines ont des avantages de simplicité de contrôle de la courbure et, en particulier, la B-spline est stable numériquement.

Ainsi, dans l'exemple décrit, la fonction de régression utilisée est une fonction de type B-spline. La régression consiste donc d'abord à construire une base B-spline d'ordre o et de nombre de nœuds O et ensuite, à utiliser cette base pour la régression appliquée à $\hat{X}$.

En outre, dans l'exemple décrit, la régression est appliquée au logarithme népérien de $\hat{X}$ dans la mesure où l'utilisation du logarithme népérien permet d'homogénéiser l'amplitude de la DSP et d'être robuste aux pics puisque la distribution du logarithme népérien de $\hat{X}$ est plus symétrique que celle de $\hat{X}$.

Ainsi, concrètement, la régression s'écrit comme suit :

[Math. 5]

$$\ln \hat{X}(k) = \sum_{j=1}^{O} \boldsymbol{B}_j c_j(k) + \epsilon(k)$$

où B est la base B-spline et les coefficients {$c_j$ ; j=1,...,O} sont les coefficients de la B-spline.

La distribution de l'erreur $\epsilon(k)$ permet de rendre la régression plus robuste. La distribution utilisée est une distribution dite à queue lourde afin de prendre en compte l'existence de pics dans $\hat{X}$.

En particulier, dans l'exemple représenté, il s'agit d'une loi de Student mais la loi utilisée pourrait être une autre loi à queue lourde. Plus précisément, le maximum de vraisemblance est calculé à partir de cette loi et en utilisant l'algorithme des moindres carrés repondérés de manière itérative (en anglais « *Iteratively reweighted least squares, IRLS* »). Cet algorithme consiste à estimer les poids des erreurs en optimisant une fonction objective où l'erreur dépend elle-même des poids de pondération. Compte tenu des valeurs estimées {$c_{min,j}$ ; j=1,...,o}, l'estimation de $\hat{V}$ est donc finalement obtenue par le calcul suivant :

[Math. 6]

$$\hat{V}(k) = e^{\sum_{j=1}^{O} \boldsymbol{B}_{min,j} c_j(k)}$$

En outre, à chaque itération de l'algorithme IRLS, les échantillons ayant une erreur supérieure à un seuil déterminé (en l'espèce, une constante multipliée par la médiane de la valeur absolue de l'erreur) peuvent être tronqués pour plus de robustesse vis-à-vis des pics.

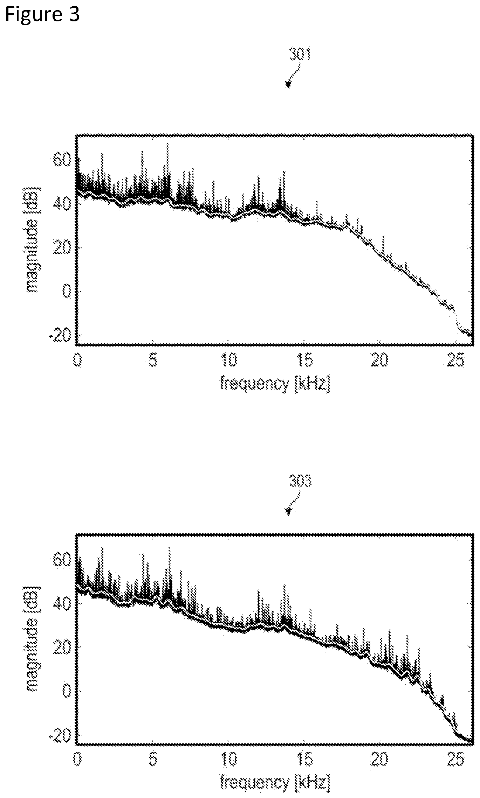

La figure 3 montre (en noir) deux exemples de densités spectrales de puissance estimées $\hat{X}$ d'un signal x représentatif de vibration d'un même système mécanique rotatif. Dans la courbe 301 le système mécanique rotatif est sain dans le sens où il n'a subi aucune détérioration (par rapport à son état nominal) alors que dans la courbe 303 le système mécanique rotatif a subi une détérioration qui entraîne une modification de son comportement vibratoire. En outre, les courbes blanches représentent les densités spectrales de puissances estimées $\hat{V}$ du bruit v obtenues à partir de l'approche décrite ci-dessus.

L'étape 207 consiste en la détermination d'une densité spectrale de puissance égalisée Q. Celle-ci est dite égalisée dans la mesure où elle peut être assimilée à une DSP d'un bruit blanc. Dans la pratique, la DSP égalisée Q est obtenue en calculant :

[Math. 7]

$$Q(k) = \hat{X}(k)/\hat{V}(k)$$

L'égalisation peut être appelée fréquentielle locale dans la mesure où la manière dont l'estimation de la DSP du bruit a été obtenue, est assimilable à une régression polynomiale locale glissante.

Avantageusement, comme la DSP égalisée Q est assimilable à la DSP d'un bruit blanc, il est possible de lui appliquer les statistiques conçues pour un bruit blanc (ou pour une DSP uniforme). C'est pourquoi dans les étapes suivantes, les différentes opérations sont appliquée à la DSP égalisée Q et non à la DSP estimé $\hat{X}$ du signal x.

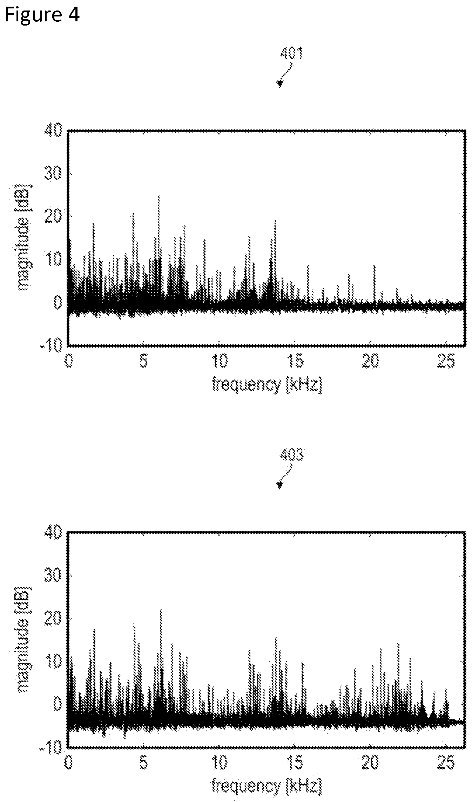

La figure 4 montre (en noir) deux exemples de densités spectrales de puissance égalisées Q obtenues à partir des DSP $\hat{X}$ représentées à la figure 3 en appliquant les étapes décrites plus haut. Ainsi, la courbe 401 correspond au système mécanique rotatif sain et la courbe 403 correspond au système mécanique rotatif détérioré. Avantageusement, l'ensemble des étapes décrites jusqu'ici permet d'obtenir la neutralisation robuste d'un bruit coloré, c'est-à-dire de s'affranchir de son influence sur le signal. En outre, dans cette approche, la DSP du bruit est estimée d'une manière robuste à l'existence de pic.

L'étape 209 consiste ensuite en la détermination d'une densité spectrale de puissance tronquée R qui est égale à l'ensemble des valeurs de la densité spectrale de puissance égalisée Q qui sont inférieures à un premier seuil $Q_r$.

En effet, dans la mesure où Q contient des pics en plus du bruit spectral et où seul le modèle de la distribution de probabilité du bruit spectral (qui correspond à la distribution de probabilité de Q(k) si x(n)=v(n)) est connu alors que le nombre de pics et leur distribution de probabilité ne sont pas connus, il est utile de tronquer Q pour éliminer ses valeurs les plus élevées dans le but de ne conserver que ce qui peut être considéré comme du bruit spectral.

Ceci afin de pouvoir utiliser ensuite un modèle de distribution du bruit connue et, par conséquent, d'être robuste aux pics.

Ainsi, R correspond à R={Q(k) | Q<$Q_r$} c'est-à-dire à l'ensemble des données spectrales inférieures à la valeur seuil $Q_r$.

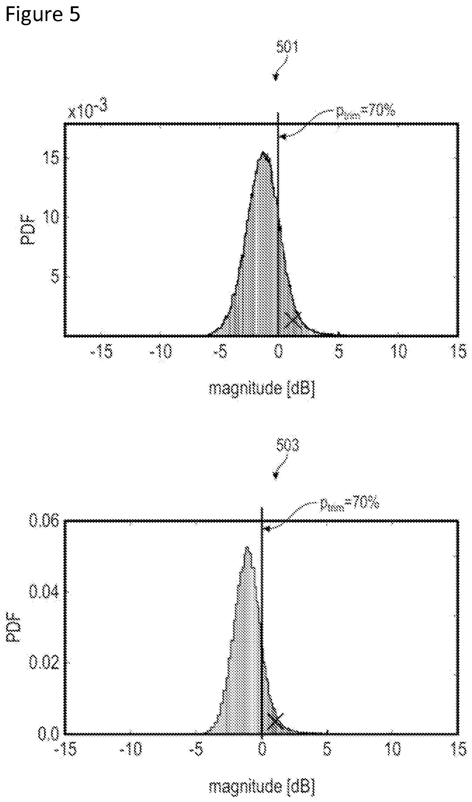

En outre, comme l'illustre la figure 5, le seuil $Q_r$ peut être fixé de sorte qu'un pourcentage déterminé $P_{trim}$ des valeurs de la densité spectrale de puissance égalisée Q soit conservé dans la densité spectrale de puissance tronquée R. En particulier, dans l'exemple représenté à la figure 5, le même pourcentage de 70% est appliqué au cas sain 501 et au cas détérioré 503. Dit autrement, les 30% des valeurs les plus haute de Q sont éliminées pour obtenir R.

L'étape 211 consiste en l'ajustement de la densité spectrale de puissance tronquée R par une loi gamma tronquée $g_r$.

Les valeurs de Q sont supposées suivre une loi gamma dans le cas où (n)=v(n)). Ainsi, les valeurs de R sont supposées être distribuées suivant une loi gamma tronquée à droite (en anglais « *Right truncated Gamma distribution* ») définie selon l'équation :

[Math. 8]

$$\forall\, u \in R \;\; g_r(u|a,b,Q_r) = c(a,b,Q_r)g(\mathrm{u|a,b})\,\mathbb{I}(u < Q_r)$$

où $g(u|a,\,b) = \Gamma(a)^{-1}b^{-a}e^{-u/b}u^{a-1}$ est la distribution gamma complète, $\Gamma(.)$ est la fonction de gamma complète et c est la constante de normalisation exprimée selon :

[Math. 9]

$$c(a,b,Q_r) = \frac{a\Gamma(a)}{\Gamma(1+a) - \Gamma\left(1+a,\frac{Q_r}{b}\right) + e^{-\frac{Qr}{b}}b^{-a}Q_r^{a}}$$

où $\Gamma(r,z) = \int_z^{\infty} e^{-t}\, t^{r-1}\, \mathrm{d}t$ est la fonction gamma incomplète supérieure.

Ainsi, la constante c s'écrit :

[Math. 10]

$$c(a,b,Q_r)^{-1} = \int_0^{Q_r} g(t|a,b)\mathrm{d}t = \Pr\left[Q(k) < Q_r|H_0\right]$$

ce qui correspond à la probabilité affectée au percentile $Q_r$ de la distribution gamma complète. $H_0$ étant l'hypothèse d'avoir du bruit spectral uniquement (x(n)=v(n)).

L'objectif ensuite est d'inférer la valeur de a et b à partir de la densité de probabilité d'une loi gamma tronquée $g_r$ à droite en connaissant R.

Pour ce faire, l'approche suivie consiste à trouver les valeurs de a et de b qui permettent d'ajuster au mieux l'histogramme de R, p(R) dans le sens d'une fonction coût.

Ainsi, dans l'exemple décrit, ceci est réalisé en utilisant la divergence de Kullback-Leibler comme une mesure de similarité. Cette divergence est définie comme suit :

[Math. 11]

$$D_{KL}(p||g_r) = \int_{\infty}^{\infty} p(u) \ln \frac{p(u)}{g_r(u|a,b,Q_r)} du$$

La différence entre le logarithme des densités de probabilité est pondérée par p(R). Ceci revient à considérer une probabilité élevée là où l'histogramme présente une grande densité d'occurrences et en particulier à résoudre le problème d'optimisation décrit par l'équation suivante :

[Math. 12]

$$\left(\hat{a}, \hat{b}\right) = \underset{a,b}{\mathrm{argmin}} \int_0^{Q_r} p(u) \ln \frac{p(u)}{g_r(u|a,b,Q_r)} du$$

qui peut être réduite à :

[Math. 13]

$$\left(\hat{a}, \hat{b}\right) = \underset{a,b}{\mathrm{argmax}} \int_0^{Q_r} p(u) \ln g_r(u|a,b,Q_r) du$$

Finalement, dans la mesure où Q est distribué comme p(R), la fonction coût peut être approximée en utilisant le principe de Monte Carlo de sorte qu'elle s'écrit :

[Math. 14]

$$\left(\hat{a}, \hat{b}\right) = \underset{a,b}{\mathrm{argmax}} \sum_{i=1}^{r} \ln g_r(Q(i)|a,b,Q_r)$$

Ainsi, dans l'exemple décrit, l'ajustement de la densité spectrale de puissance tronquée R par une loi gamma tronquée $g_r$ est réalisé à partir d'une maximisation d'une fonction de vraisemblance d'une densité de probabilité de la loi gamma tronquée $g_r$.
Une telle fonction coût est non-convexe et non-différentiable. Elle peut être calculée en utilisant l'algorithme de Nelder-Mead par exemple.

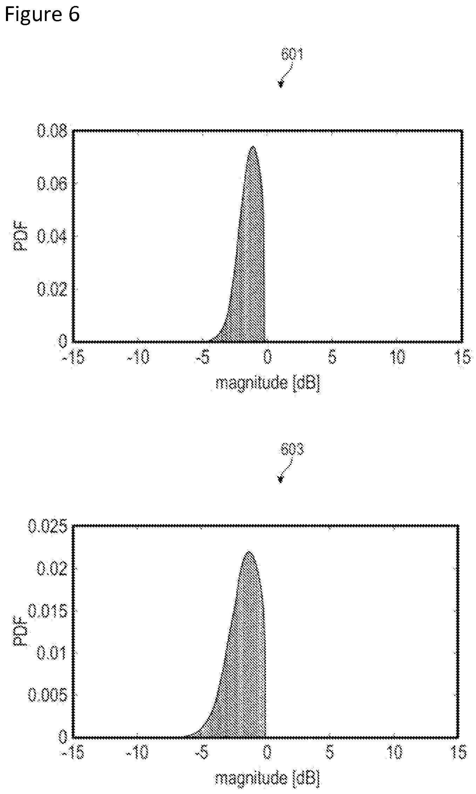

La figure 6 illustre (en gris), pour le cas sain 601 et pour le cas détérioré 603, l'histogramme de R obtenu à partir de Q tronqué à droite selon l'approche décrite plus haut. En outre, les courbes noires représentent les ajustements de ces histogrammes par des densités de probabilité de la loi gamma tronquée à droite selon l'approche décrite plus haut également.
L'étape 213 consiste en la détermination, à partir de la loi gamma tronquée $g_r$, d'un second seuil dit de détection $V_{det}$.
Après obtention du couple de valeurs estimées ($\hat{a}$, $\hat{b}$) l'approche suivie consiste, dans un premier temps, à fixer une valeur dite probabilité de fausse alarme $\alpha$. Elle représente la probabilité de détecter un échantillon comme pic alors que c'est du bruit. Elle correspond à un seuil de détection de pics pour lequel plus la valeur $\alpha$ est élevée plus le nombre de pic détecté est élevé et le risque de détecter du bruit spectrale l'est aussi. $\alpha$ est généralement fixée entre 0.01 et 0.001.
Le seuil $V_{det}$ est ensuite obtenu en concordance avec la probabilité de fausse alarme $\alpha$ à partir de l'équation :

[Math. 15]

$$\alpha = P(Q \geq v_{det}|H_0) = \int_{v_{det}}^{\infty} g(t|a,b) dt$$

Ainsi, le seuil de détection $V_{det}$ est indépendant de la fréquence k dans la mesure où l'étape d'égalisation a déjà été effectuée.
L'étape 215 consiste en l'extraction, dans la densité spectrale de puissance égalisée Q, des pics $Q_{det}$ supérieurs au seuil de détection $V_{det}$.

Après obtention de $V_{det}$, le test statistique de détection est effectué afin de décider quels échantillons sont considérés comme pics, sur la base d'une preuve solide à l'encontre de l'hypothèse $H_0$. Ceci est réalisé à travers le test d'hypothèse suivant :

[Math. 16]

$$\begin{cases} Q(k) < v_{det} \Rightarrow H_0 \ \text{acceptée} \\ \ Q(k) \geq v_{det} \Rightarrow H_0 \ \text{rejetée} \end{cases}$$

où l'hypothèse $H_0$ correspond à bruit spectral uniquement dans $\hat{X}$.

Les échantillons détectés de Q sont donc les pics $Q_{det}$.

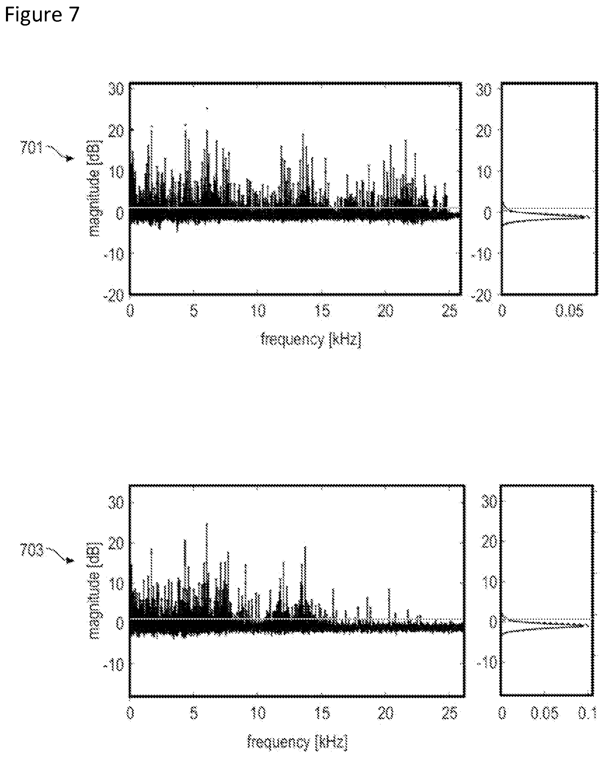

Le résultat de ce test d'hypothèse est illustré sur la Figure 7 pour le cas sain 703 et le cas détérioré 701. Le seuil $V_{det}$ est représenté sous la forme du ligne grise soit sur les densités spectrales de puissance (à gauche) soit sur les densités de probabilité (à droite).

L'étape 217 consiste enfin en l'identification d'une défaillance du système mécanique rotatif à partir d'une comparaison des pics extraits $Q_{det}$ avec une densité spectrale de puissance de référence $Q_{ref}$.

Dans la mesure où le procédé proposé permet la détection de défaillances mécaniques d'une manière aveugle, il est utile de comparer les pics détectés dans le cas sain avec ceux du cas défaillant (i.e. détérioré).

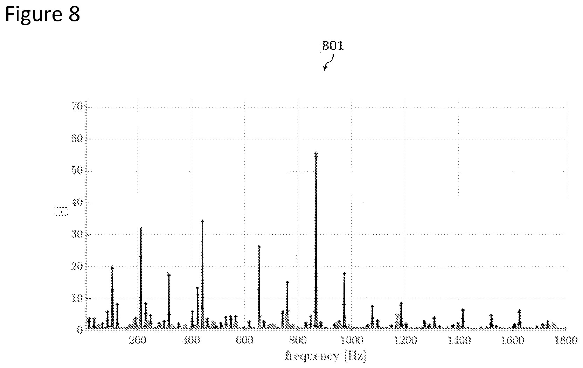

En l'espèce, dans l'exemple décrit, la densité spectrale de puissance de référence $Q_{ref}$ correspond à une densité spectrale de puissance égalisée obtenue pour un système mécanique rotatif d'un aéronef sans défaillance et c'est la comparaison entre les deux ($Q_{det}$ en noire sur la figure 8 et $Q_{ref}$ en gris sur le figure 8) qui permet d'identifier une défaillance.

Les signaux 801 de la figure 8 illustre cette comparaison. Les pics détectés dans le cas défaillant $Q_{det}$ (noir avec des « + ») contiennent de nouvelles familles cycliques qui ne sont pas présentes dans l'ensemble des pics détectés dans la mesure saine de référence $Q_{ref}$ (gris avec des « o »).

A titre d'exemple non-limitatif, il est possible de soustraire $Q_{ref}$ de $Q_{det}$ pour ne faire ressortir que les anomalies/défauts. Le critère de l'énergie (i.e. la somme des amplitudes au carré) des harmoniques détectés dans cet ensemble peut ensuite être utilisé comme indicateur de la présence d'un ou de plusieurs défauts. Avantageusement, cela permet, même sans connaître la cinématique du système, de détecter une anomalie et de déclencher le cas échéant une alarme de défaillance dans la mesure où toute une famille d'harmoniques caractérisées par une répétition (harmoniques) et une modulation (bandes latérales).

Avantageusement, le procédé de surveillance selon l'invention est aveugle c'est-à-dire qu'il ne nécessite aucune connaissance a priori du système mécanique rotatif surveillé (i.e. de sa cinématique).

Avantageusement également, le procédé de surveillance décrit est robuste à l'utilisation d'un signal présentant une DSP inconnue avec un bruit coloré.

Avantageusement encore le seuil de détection obtenu est indépendant de la fréquence.

En outre, le procédé de surveillance selon l'invention permet de ne pas surveiller tous les pics mais de cibler uniquement des fréquences d'intérêt.

De plus, la surveillance est réalisée à partir de l'apparition d'un ensemble de fréquences, contrairement aux approches classiques qui considèrent plutôt l'amplitude et parfois la phase.

Enfin, le procédé de surveillance selon l'invention est robuste également à l'application à un système mécanique rotatif dans lequel le nombre d'éléments mécaniques qui génèrent des vibrations est inconnu.

## Revendications

1. Procédé de surveillance d'un système mécanique rotatif (101) d'un aéronef comprenant les étapes suivantes :

- acquisition (201) d'un signal (x) représentatif de vibrations du système mécanique rotatif (101) ;
- détermination (203) d'une densité spectrale de puissance estimée ($\hat{X}$) dudit signal (x) ;
- détermination (205) d'une densité spectrale de puissance estimée ($\hat{V}$) d'un bruit (v) à partir de la densité spectrale de puissance estimée ($\hat{X}$) du signal (x) ;

ledit procédé de surveillance étant **caractérisé en ce qu'**il comprend en outre les étapes suivantes :

- détermination (207) d'une densité spectrale de puissance égalisée (Q) égale à la densité spectrale de puissance estimée ($\hat{X}$) du signal (x) divisée par la densité spectrale de puissance estimée ($\hat{V}$) du bruit (v) ;

- détermination (209) d'une densité spectrale de puissance tronquée (R) égale à l'ensemble des valeurs de la densité spectrale de puissance égalisée (Q) inférieures à un premier seuil ($Q_r$) ;
- ajustement (211) de la densité spectrale de puissance tronquée (R) par une loi gamma tronquée ($g_r$) ;
- détermination (213), à partir de la loi gamma tronquée ($g_r$), d'un second seuil dit de détection ($V_{det}$) ;
- extraction (215), dans la densité spectrale de puissance égalisée (Q), des pics ($Q_{det}$) supérieurs au seuil de détection ($V_{det}$) ; et,
- identification (217) d'une défaillance du système mécanique rotatif (101) à partir d'une comparaison des pics extraits ($Q_{det}$) avec une densité spectrale de puissance de référence ($Q_{ref}$).

2. Procédé selon la revendication 1, dans lequel le signal représentatif de vibrations (x) est un signal vibratoire, de préférence obtenu à partir d'un accéléromètre, ou un signal acoustique, de préférence obtenu à partir d'un microphone.

3. Procédé selon la revendication 2, dans lequel la densité spectrale de puissance estimée ($\hat{X}$) du signal (x) est déterminée à partir du calcul du périodogramme moyenné du signal (x).

4. Procédé selon l'une quelconque des revendications précédentes, dans lequel la densité spectrale de puissance estimée ($\hat{V}$) du bruit (v) est déterminée à partir d'une régression appliquée à la densité spectrale de puissance estimée ($\hat{X}$) du signal (x).

5. Procédé selon la revendication 4, dans lequel la régression est appliquée au logarithme népérien de la densité spectrale de puissance estimée ($\hat{X}$) du signal (x).

6. Procédé selon l'une quelconque des revendications 4 ou 5, dans lequel la fonction de régression utilisée est une fonction de type B-spline.

7. Procédé selon l'une quelconque des revendications précédentes, dans lequel le premier seuil ($Q_r$) est fixé de sorte qu'un pourcentage déterminé ($P_{trim}$) des valeurs de la densité spectrale de puissance égalisée (Q) est conservé dans la densité spectrale de puissance tronquée (R).

8. Procédé selon l'une quelconque des revendications précédentes, dans lequel l'ajustement de la densité spectrale de puissance tronquée (R) par une loi gamma tronquée ($g_r$) est réalisé à partir d'une maximisation d'une fonction de vraisemblance d'une densité de probabilité de ladite loi gamma tronquée ($g_r$).

9. Procédé selon l'une quelconque des revendications précédentes, dans lequel le seuil de détection ($V_{det}$) est déterminé tel que la densité de probabilité de la loi gamma tronquée ($g_r$) est égale à une valeur prédéterminée ($\alpha$) dite probabilité de fausse alarme.

10. Procédé selon l'une quelconque des revendications précédentes, dans lequel la densité spectrale de puissance de référence ($Q_{ref}$) correspond à une densité spectrale de puissance égalisée obtenue pour un système mécanique rotatif d'un aéronef sans défaillance.

**Patentansprüche**

1. Überwachungsverfahren eines drehenden mechanischen Systems (101) eines Luftfahrzeugs, umfassend die folgenden Schritte:

- Erfassung (201) eines Signals (x), das für Schwingungen des drehenden mechanischen Systems (101) repräsentativ ist;
- Bestimmung (203) einer geschätzten spektralen Leistungsdichte ($\hat{X}$) des Signals (x);
- Bestimmung (205) einer geschätzten spektralen Leistungsdichte ($\hat{V}$) eines Rauschens (v) anhand der geschätzten spektralen Leistungsdichte ($\hat{X}$) des Signals (x);

wobei das Überwachungsverfahren **dadurch gekennzeichnet ist, dass** es weiter die folgenden Schritte umfasst:

- Bestimmung (207) einer egalisierten spektralen Leistungsdichte (Q), die gleich der geschätzten spektralen Leistungsdichte ($\hat{X}$) des Signals (x) geteilt durch die geschätzte spektrale Leistungsdichte ($\hat{V}$) des Rauschens (v) ist;

- Bestimmung (209) einer trunkierten spektralen Leistungsdichte (R), die gleich der Gesamtheit von Werten der egalisierten spektralen Leistungsdichte (Q), die kleiner als ein erster Schwellenwert ($Q_r$) sind, ist;
- Anpassung (211) der trunkierten spektralen Leistungsdichte (R) durch eine trunkierte Gamma-Verteilung ($g_r$);
- Bestimmung (213) eines zweiten Schwellenwerts, dem sogenannten Detektionsschwellenwert ($V_{det}$), anhand der trunkierten Gamma-Verteilung ($g_r$);
- Extraktion (215), in der egalisierten spektralen Leistungsdichte (Q), von Peaks ($Q_{det}$), die größer als der Detektionsschwellenwert ($V_{det}$) sind; und
- Identifikation (217) eines Ausfalls des drehenden mechanischen Systems (101) anhand eines Vergleichs der extrahierten Peaks ($Q_{det}$) mit einer spektralen Referenz-Leistungsdichte ($Q_{ref}$).

2.  Verfahren nach Anspruch 1, wobei das für Schwingungen (x) repräsentative Signal ein Schwingungssignal, vorzugsweise erhalten anhand eines Beschleunigungsmessers, oder ein Akustiksignal, vorzugsweise erhalten anhand eines Mikrophons, ist.

3.  Verfahren nach Anspruch 2, wobei die geschätzte spektrale Leistungsdichte ($\hat{X}$) des Signals (x) anhand der Berechnung des mittleren Periodogramms des Signals (x) bestimmt wird.

4.  Verfahren nach einem der vorstehenden Ansprüche, wobei die geschätzte spektrale Leistungsdichte ($\hat{V}$) des Rauschens (v) anhand einer Regression bestimmt wird, die auf die geschätzte spektrale Leistungsdichte ($\hat{X}$) des Signals (x) angewendet wird.

5.  Verfahren nach Anspruch 4, wobei die Regression auf den natürlichen Logarithmus der geschätzten spektralen Leistungsdichte ($\hat{X}$) des Signals (x) angewendet wird.

6.  Verfahren nach einem der Ansprüche 4 oder 5, wobei die genutzte Regressionsfunktion eine Funktion vom B-Spline-Typ ist.

7.  Verfahren nach einem der vorstehenden Ansprüche, wobei der erste Schwellenwert ($Q_r$) derart festgelegt wird, dass ein von den Werten der egalisierten spektralen Leistungsdichte (Q) bestimmter Prozentsatz ($P_{trim}$) in der trunkierten spektralen Leistungsdichte (R) bewahrt bleibt.

8.  Verfahren nach einem der vorstehenden Ansprüche, wobei die Anpassung der trunkierten spektralen Leistungsdichte (R) durch eine trunkierte Gamma-Verteilung ($g_r$) anhand einer Maximierung einer Likelihood-Funktion einer Wahrscheinlichkeitsdichte der trunkierten Gamma-Verteilung ($g_r$) durchgeführt wird.

9.  Verfahren nach einem der vorstehenden Ansprüche, wobei der Detektionsschwellenwert ($V_{det}$) so bestimmt wird, dass die Wahrscheinlichkeitsdichte der trunkierten Gamma-Verteilung ($g_r$) gleich einem vorbestimmten Wert ($\alpha$), der sogenannten Fehlalarmwahrscheinlichkeit, ist.

10. Verfahren nach einem der vorstehenden Ansprüche, wobei die spektrale Referenz-Leistungsdichte ($Q_{ref}$) einer egalisierten spektralen Leistungsdichte entspricht, die für ein drehendes mechanisches System eines Luftfahrzeugs ohne Ausfall erhalten wird.

## Claims

1.  A method for monitoring a rotary mechanical system (101) of an aircraft, comprising the following steps:

    - acquiring (201) a signal (x) representative of vibrations of the rotary mechanical system (101);
    - determining (203) an estimated power spectral density ($\hat{X}$) of said signal (x);
    - determining (205) an estimated power spectral density ($\hat{V}$) of a noise (v) from the estimated power spectral density ($\hat{X}$) of the signal (x);

    said monitoring method being **characterised in that** it further comprises the following steps:

    - determining (207) an equalised power spectral density (Q) equal to the estimated power spectral density ($\hat{X}$) of the signal (x) divided by the estimated power spectral density ($\hat{V}$) of the noise (v);

- determining (209) a truncated power spectral density (R) equal to the assembly of the values of the equalised power spectral density (Q) below a first threshold ($Q_r$);
- adjusting (211) the truncated power spectral density (R) by a truncated gamma distribution ($g_r$);
- determining (213), on the basis of the truncated gamma distribution ($g_r$), a second detection threshold ($V_{det}$);
- extracting (215), from the equalised power spectral density (Q), peaks ($Q_{det}$) above the detection threshold ($V_{det}$); and,
- identifying (217) a fault in the rotary mechanical system (101) from a comparison of the extracted peaks ($Q_{det}$) with a reference power spectral density ($Q_{ref}$).

2. The method according to claim 1, wherein the vibration representative signal (x) is a vibration signal, preferably obtained from an accelerometer, or an acoustic signal, preferably obtained from a microphone.

3. The method according to claim 2, wherein the estimated power spectral density ($\hat{X}$) of the signal (x) is determined from the calculation of the averaged periodogram of the signal (x).

4. The method according to any one of the preceding claims, wherein the estimated power spectral density ($\hat{V}$) of the noise (v) is determined from a regression applied to the estimated power spectral density ($\hat{X}$) of the signal (x).

5. The method according to claim 4, wherein the regression is applied to the natural logarithm of the estimated power spectral density ($\hat{X}$) of the signal (x).

6. The method according to any one of claims 4 or 5, wherein the regression function used is a B-spline type function.

7. The method according to any one of the preceding claims, wherein the first threshold ($Q_r$) is set so that a determined percentage ($P_{trim}$) of the values of the equalised power spectral density (Q) is retained in the truncated power spectral density (R).

8. The method according to any one of the preceding claims, wherein the adjustment of the truncated power spectral density (R) by a truncated gamma distribution ($g_r$) is carried out on the basis of a maximisation of a likelihood function of a probability density of said truncated gamma distribution ($g_r$).

9. The method according to any one of the preceding claims, wherein the detection threshold ($V_{det}$) is determined such that the probability density of the truncated gamma distribution ($g_r$) is equal to a predetermined value ($\alpha$) referred to as the false alarm probability.

10. The method according to any of the preceding claims, wherein the reference power spectral density ($Q_{ref}$) corresponds to an equalised power spectral density obtained for a rotary mechanical system of a fault-free aircraft.

Figure 1

Figure 2

Figure 3

Figure 4

Figure 5

Figure 6

Figure 7

Figure 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010094915 A1

- WO 2014184657 A1

**Littérature non-brevet citée dans la description**

- **DAVID A CLIFTON**. Bayesian extreme value statistics for novelty detection in gas-turbine engines. *2008 IEEE Aerospace Conference*